(19) Europäisches Patentamt
European Patent Office
Office européen des brevets

(11) **EP 0 663 572 B1**

(12) **EUROPÄISCHE PATENTSCHRIFT**

(45) Veröffentlichungstag und Bekanntmachung des Hinweises auf die Patenterteilung:
**08.12.1999 Patentblatt 1999/49**

(51) Int. Cl.[6]: **B60H 1/32**, B60H 1/00, F24F 13/30, B61C 17/04, B61D 27/00

(21) Anmeldenummer: **95100168.4**

(22) Anmeldetag: **07.01.1995**

(54) **Kompaktklimagerät**

Compact air-conditioning unit

Appareil compact de climatisation

(84) Benannte Vertragsstaaten:
**AT DE ES FR GB IT**

(30) Priorität: **12.01.1994 DE 4400643**
**22.04.1994 DE 4414035**

(43) Veröffentlichungstag der Anmeldung:
**19.07.1995 Patentblatt 1995/29**

(73) Patentinhaber:
**ABB Daimler-Benz Transportation (Technology) GmbH**
**13627 Berlin (DE)**

(72) Erfinder: **Nestler, Dietrich**
**D-68163 Mannheim (DE)**

(74) Vertreter:
**Luderschmidt, Schüler & Partner GbR**
**Patentanwälte,**
**Postfach 3929**
**65029 Wiesbaden (DE)**

(56) Entgegenhaltungen:
**US-A- 4 607 497**

**Beschreibung**

Die Erfindung bezieht sich auf ein Kompaktklimagerät gemäß dem Oberbegriff des Anspruchs 1 und kann vorzugsweise bei Fahrzeugen, insbesondere für Fahrerstände in Schienenfahrzeugen, verwendet werden.

Aus der ABB HENSCHEL-Druckschrift DEWAG 9202D ist ein Kompaktklimagerät für ein Fahrzeug bekannt. Die Abmessungen eines solchen Kompaktklimagerätes sind von den geforderten Luftmengen für Klima- und Verflüssigerkühlung abhängig. Die Größe des Verdampfers und des Verflüssigers bestimmen maßgeblich die Größe des Klimagerätes. Dabei sind Maximalwerte für die Luftgeschwindigkeit der durch Verflüssiger und Verdampfer strömenden Luftmenge zu beachten. Bei Verdampfern liegt die maximale Luftgeschwindigkeit bei ungefähr 2 m/s. Bei höheren Luftgeschwindigkeiten werden im Verdampfer ausgeschiedene Wassertröpfchen mit dem Luftstrom mitgerissen und gelangen derart in den zu klimatisierenden Raum, was unerwünscht ist. Bei Verflüssigern liegt die maximale Luftgeschwindigkeit bei ungefähr 6 m/s. Bei höheren Luftgeschwindigkeiten steigt die Leistungsanforderung an den Verflüssiger-Lüfter in unwirtschaftlichem Ausmaß an und die Geräuschentwicklung wird zu hoch. Üblicherweise haben deshalb Kompaktklimageräte eine quadratische bis rechteckige Formgebung, um genügend freien Luftquerschnitt für den Verflüssiger und Verdampfer zu erzielen.

Falls jedoch aufgrund beengter Platzverhältnisse am Einbauort eine quadratische bis rechteckige Formgebung des Kompaktklimagerätes mit ausreichend großen Abmessungen, insbesondere mit ausreichender Breite und Höhe, nicht möglich ist, sondern nur eine schmale, niedrige, jedoch lange Formgebung, ist es schwierig, ausreichend große freie Luftquerschnitte für den Verdampfer und Verflüssiger zur Verfügung zu stellen.

Der Erfindung liegt die Aufgabe zugrunde, ein Kompaktklimagerät der eingangs genannten Art anzugeben, das speziell bei relativ schmaler und niedriger, jedoch langer äußerer Formgebung ausreichend freie Luftquerschnitte für den Verdampfer und/oder Verflüssiger zur Verfügung stellt, um die erforderliche Luftmenge bei technisch vertretbarer Luftgeschwindigkeit zu bewältigen.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß es durch die geteilten Verdampfer und/oder Verflüssiger möglich wird, die luftmengenbedingten Vorquerschnitte in den kleinen Querschnitt des Kompaktklimagerätes unterzubringen. Der zur Verfügung stehende kleine Gerätequerschnitt wird aufgeteilt in einen ersten freien Luftquerschnitt für das erste Aggregat und einen zweiten freien Luftquerschnitt neben dem ersten Aggregat für die Zuführung der Luft zum zweiten Aggregat, wobei ausgenutzt wird, daß lediglich die Luftgeschwindigkeit der durch die Aggregate strömenden Luft begrenzt ist und die Luftgeschwindigkeit der durch den zweiten freien Luftquerschnitt strömenden Luft dieser Beschränkung nicht unterliegt und wesentlich höher sein kann. Trotz des kleinen Gerätequerschnittes ist der insgesamt zur Verfügung stehende freie Luftquerschnitt ausreichend groß, um die geforderte große Luftmenge zu bewältigen, wobei die Strömungsgeschwindigkeiten in den einzelnen Aggregaten unterhalb der Maximalwerte liegen.

Vorteilhafte Ausgestaltungen der Erfindun sind in den Unteransprüchen gekennzeichnet.

Die Erfindung wird nachstehend anhand der in der Zeichnung dargestellten Ausführungsbeispiele erläutert.

Es zeigen:

Figur 1          eine Sicht auf ein geöffnetes Kompaktklimagerät,
Figur 2          eine Sicht auf ein geschlossenes Kompaktklimagerät,
Figur 3          eine Seitenansicht eines Kompaktklimagerätes,
Figur 4, 5       zwei Varianten hinsichtlich der Gehäuseausführung,
Figur 6          die Luftführungsverhältnisse innerhalb eines Verdampfers bei konventioneller Technik,
Figur 7          die Luftführungsverhältnisse bei einem geteilten Verdampfer,
Figur 8, 9, 10   unterschiedliche Ausführungsbeispiele,
Figur 11         die prinzipielle Einbindung von geteiltem Verdampfer und geteiltem Verflüssiger,
Figur 12, 13, 14 Befestigungsmittel für den Verdichter und Zugangsmittel zu am Verdichter angeordneten Ventilen.

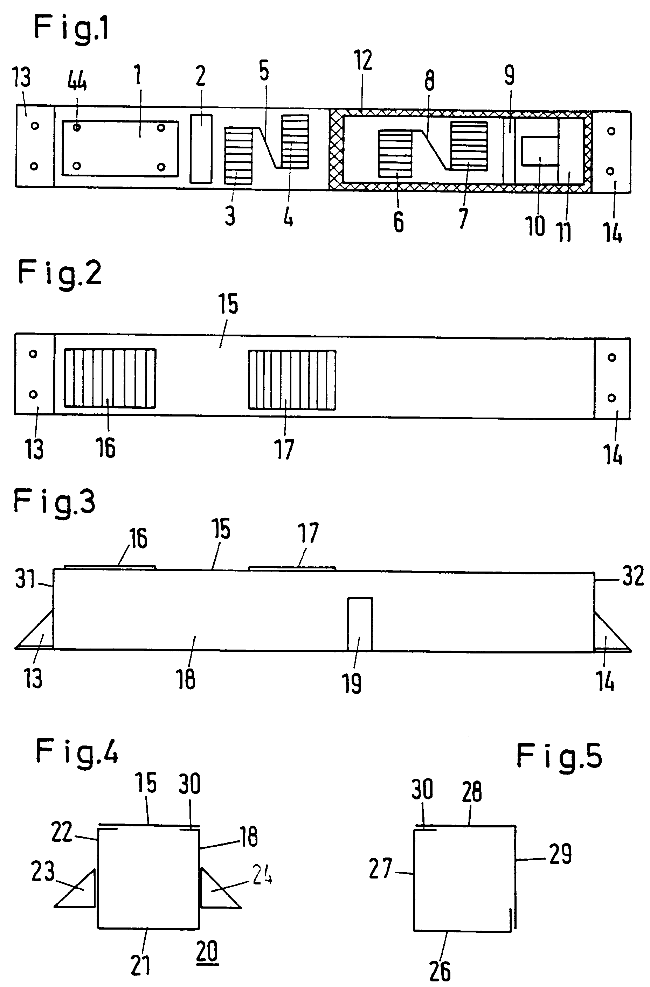

In Figur 1 ist eine Sicht auf ein geöffnetes Kompaktklimagerät dargestellt. Es sind ein Verdichter 1, ein Verflüssiger-Lüfter 2 und zwei Verflüssiger 3, 4 zu erkennen, wobei ein Luftleitblech 5 zur Führung der neben dem Verflüssiger 3 vorbei zum Verflüssiger 4 strömenden Luft vorgesehen ist. Die aus der Außenatmosphäre vom Verflüssiger-Lüfter 2 angesaugte Luft strömt durch die beiden Verflüssiger 3, 4 und gelangt danach wiederum in die Außenatmosphäre. Die zur Befestigung des Verdichters 1 am Gehäuse dienenden Verdichter-Befestigungsschrauben 44 im Bodenbereich des Verdichters sind angedeutet.

Für die Klimatisierung, d.h. Abkühlung und/oder Erwärmung von Luft (Umluft + Frischluft) sind zwei Verdampfer 6, 7 vorgesehen, denen ein Heizaggregat 9 und ein Klimalüfter 10 nachgeordnet sind. Der Klimalüfter 10 saugt die Zuluft in die beiden Verdampfer 6, 7 an und drückt die klimatisierte Zuluft in einen Luftkanal 11 zum Fahrzeug, wobei ein Luftleitblech 8 zur Führung der am Verdampfer 6 vorbei in den Verdampfer 7 strömenden Luft dient.

Mit Ziffer 12 ist die Wärmeisolation bezeichnet, die die Baueinheit Verdampfer/Heizaggregat/Klimalüfter/Luftkanal umgibt. Die Montage des Kompaktklimagerätes auf dem Wagendach eines Fahrzeuges erfolgt über Auflagen 13, 14.

In Figur 2 ist eine Sicht auf ein geschlossenes Kompaktklimagerät dargestellt. Es ist ein Deckel 15 zu erkennen, der mit einem Lufteinlaßgitter 16 und einem Luftausblasgitter 17 versehen ist. Die vom Verflüssiger-Lüfter 2 angesaugte Außenluft strömt durch das Gitter 16 ein und wird durch das Gitter 17 ausgeblasen. Der Deckel 15 ist vorzugsweise geteilt, damit beispielsweise Reinigungs-, Einstell- und Kontrollarbeiten bei laufender Anlage durchgeführt werden können. Sowohl Lufteinlaßgitter 16 als auch Luftausblasgitter 17 sind begehbar ausgeführt.

In Figur 3 ist eine Seitenansicht eines Kompaktklimagerätes dargestellt. Es sind eine Seitenwand 18 und der Deckel 15 mit Lufteinlaßgitter 16 und Luftausblasgitter 17 zu erkennen. Ein Umluftkanal 19 führt vom Wagendach des Fahrzeugs zum Luftkanal vor den Verdampfern 6, 7. Alternativ kann die aus dem Innenraum des Fahrzeuges kommende Umluft auch über den Gehäuseboden in das Kompaktklimagerät geführt werden. Die Stirnwände des Kompaktklimagerätes, an denen die Auflagen 13, 14 montiert sind, sind mit Ziffern 31, 32 bezeichnet.

Die klimatisierte Zuluft zum Fahrzeug kann über die Stirnwand, seitlich oder über den Gehäuseboden das Kompaktklimagerät verlassen.

In den Figuren 4, 5 sind zwei Varianten hinsichtlich der Gehäuseausführung dargestellt. Bei der ersten Variante gemäß Figur 4 besteht das Klimageräte-Gehäuse aus einem U-förmigen Gehäuse 20 mit Bodenblech 21 und zwei Seitenwänden 18, 22, einem Deckel 15 und zwei Stirnwänden. Der Deckel 15 ist als Flachdeckel ausgebildet. Abwinkelungen 30 an den Seitenwänden 18, 22 dienen zur Abstützung und Abdichtung des Deckels 15. Bei dieser ersten Variante ist eine Zugänglichkeit von oben gegeben und es ist möglich, die Montage des Kompaktklimagerätes auf dem Wagendach auch über seitlich angeordnete Auflagen 23, 24 vorzunehmen.

Bei der zweiten Variante gemäß Figur 5 besteht das Klimageräte-Gehäuse aus zwei jeweils L-förmigen Einheiten und zwei Stirnwänden, wobei die erste Einheit ein Bodenblech 26 und eine Seitenwand 27 sowie die zweite Einheit einen Deckel 28 und eine Seitenwand 29 aufweist. An den Verbindungskanten der beiden L-förmigen Einheiten 26/27 und 28/29 sind wiederum Abwinkelungen 30 für Abdichtung und Abstützung vorgesehen. Bei der zweiten Variante muß seitlicher Raum für die Öffnung der zweiten L-förmigen Einheit 28/29 vorhanden sein. Die Zugänglichkeit ist seitlich und von oben gegeben.

Bei beiden Varianten ist das Klimageräte-Gehäuse selbsttragend und besteht vorteilhaft aus lediglich zwei Grundelementen. Die Auflage erfolgt im Normalfall an den Stirnseiten, jedoch ist auch eine längsseitige Auflage problemlos realisierbar. Das Klimageräte-Gehäuse ist sehr stabil und begehbar, was ein großer Vorteil bei vollgebauten Wagendächern ist. Das Gerät kann längs oder quer zur Fahrtrichtung des Fahrzeuges eingebaut werden.

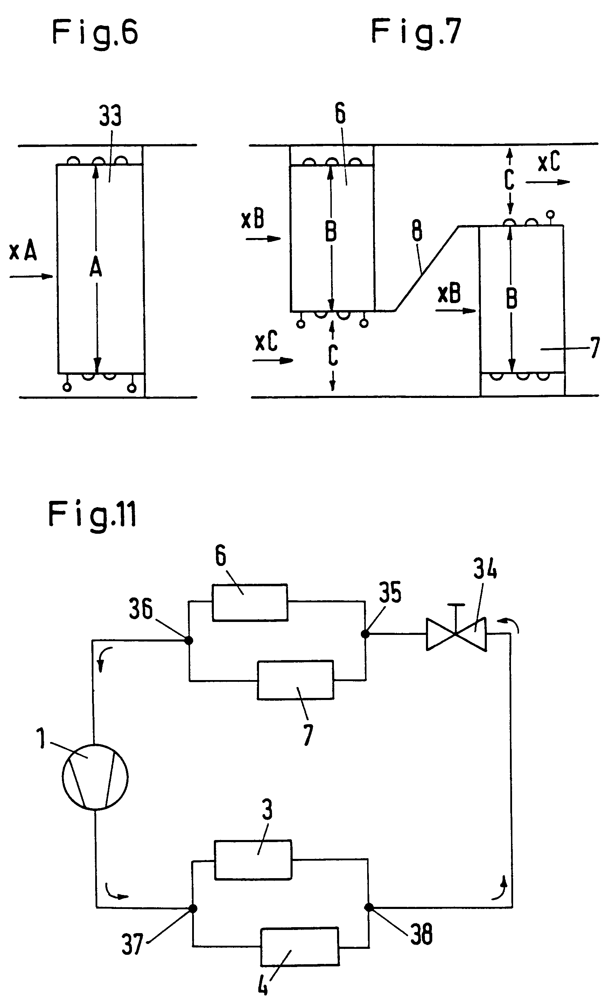

In Figur 6 sind die Luftführungsverhältnisse innerhalb eines Verdampfers bei konventioneller Technik dargestellt. Es ist ein Verdampfer 33 mit einem freien Luftquerschnitt A (freier Quer schnitt am Verdampfer = berippte Breite x Höhe < als Gerätequer schnitt) dargestellt. Die Geschwindigkeit der durch den Verdampfer strömenden Luft ist mit xA bezeichnet und darf einen Maximalwert von 2 m/s nicht überschreiten, damit zuverlässig verhindert wird, daß Wassertröpfchen, die aufgrund der abkühlenden Luft im Verdampfer ausgeschieden werden, mit dem Luftstrom mitgerissen werden und derart in den Luftkanal für die klimatisierte Zuluft zum Fahrzeug gelangen. Aufgrund der einzuhaltenden Abmessungen des Klimageräte-Gehäuses ist eine Vergrößerungs des freien Luftquerschnittes A des Verdampfers nicht möglich, so daß nur eine relativ geringe Luftmenge mit maximaler Luftgeschwindigkeit durchgesetzt werden kann.

In Figur 7 sind die Luftführungsverhältnisse bei einem erfindungsgemäß geteilten Verdampfer dargestellt. Es wird wiederum davon ausgegangen, daß für die Luftzufuhr aufgrund der vorgeschriebenen Abmessungen des Klimageräte-Gehäuses lediglich der freie Luftquerschnitt A (< Gerätequerschnitt) zur Verfügung steht. Wie zu erkennen ist, sind zwei Verdampfer 6, 7 versetzt hintereinander angeordnet, wobei jeder Verdampfer 6, 7 einen freien Luftquerschnitt von z.B. B = 2/3 A aufweist und ein Luftleitblech 8 zur Luftführung zwischen beiden Verdampfern 6, 7 dient. Die Luft strömt mit einer unterhalb des Maximalwertes liegenden Luftgeschwindigkeit xB durch den Verdampfer 6. Nach dem Verdampfer 6 verengt sich der freie Luftquerschnitt z.B. auf den Wert C = 1/3 A und die Luftgeschwindigkeit steigt z.B. auf den doppelten Wert xC = 2 xB. Dies ist jedoch unkritisch, da nach dem Verdampfer 6 keine weitere Abkühlung der Luft erfolgt und dementsprechend keine weiteren Wassertröpfchen ausfallen. Zwischen Wandung des Klimageräte-Gehäuses und dem Verdampfer 6 verbleibt ein Luftquerschnitt von z.B. C = 1/3 A, durch den die Luft mit einer Geschwindigkeit von xC = 2 xB strömt. Vor Eintritt der Luft in den Verdampfer 7 verdoppelt sich der freie Luftquerschnitt von C = 1/3 A auf z.B. B = 2/3 A. Gleichzeitig halbiert sich die Luftgeschwindigkeit auf den Wert xB und durchströmt mit dieser Geschwindigkeit den Verdampfer 7.

Wie ein Vergleich der freien Luftquerschnitte gemäß den Anordnungen nach Figur 6 und Figur 7 zeigt, hat sich der freie Luftquerschnitt beim geteilten Verdampfer gemäß Figur 7 vom Wert A auf den Wert 2B = 4/3 A = 133% von A gesteigert, ohne daß dabei die vorgeschriebenen Abmessungen des Klimageräte-Gehäuses hinsichtlich des Gerätequerschnittes oder die Luftgeschwindigkeit zu vergrößern sind.

Die in den Figuren 6 und 7 beschriebenen Zusammenhänge sind auch beim Verflüssiger in gleicher Weise gegeben, so daß vorteilhaft ebenfalls ein geteilter Verflüssiger - bestehend aus zwei versetzt hintereinander angeordneten Aggregaten - anstelle eines einzigen Verflüssigers eingesetzt wird.

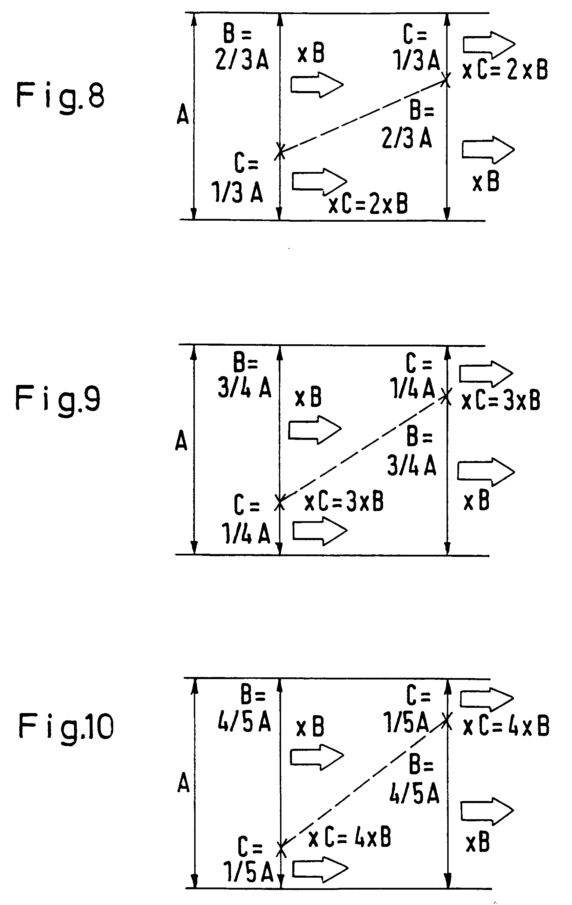

Dabei sind die vorstehend angegebenen Zusammenhänge B = 2/3 A und C = 1/3 A lediglich beispielhaft. Es sind Varianten mit B = 3/4 A und C = 1/4 A sowie B = 4/5 A und C = 1/5 A sowie beliebige Zwischenwerte möglich. In den Figuren 8, 9 und 10 sind unterschiedliche Ausführungsbeispiele schematisch dargestellt.

Das Ausführungsbeispiel gemäß Figur 8 entspricht dem bereits unter Figur 7 behandelten Beispiel mit B = 2/3 A und C = 1/3 A und Verdoppelung der Luftgeschwindigkeit $xC = 2\, xB$. Beim Ausführungsbeispiel gemäß Figur 9 gilt B = 3/4 A und C = 1/4 A, was zur Verdreifachung der Luftgeschindigkeit $xC = 3\, xB$ führt. Der insgesamt zur Verfügung stehende freie Luftquerschnitt erhöht sich auf 2 B = 3/2 A = 150% von A. Beim Ausführungsbeispiel gemäß Figur 10 gilt B = 4/5 A und C = 1/5 A, was zur Vervierfachung der Luftgeschwindigkeit $xC = 4\, xB$ führt. Der insgesamt zur Verfügung stehende freie Luftquerschnitt erhöht sich auf 2B = 8/5 = 160% von A.

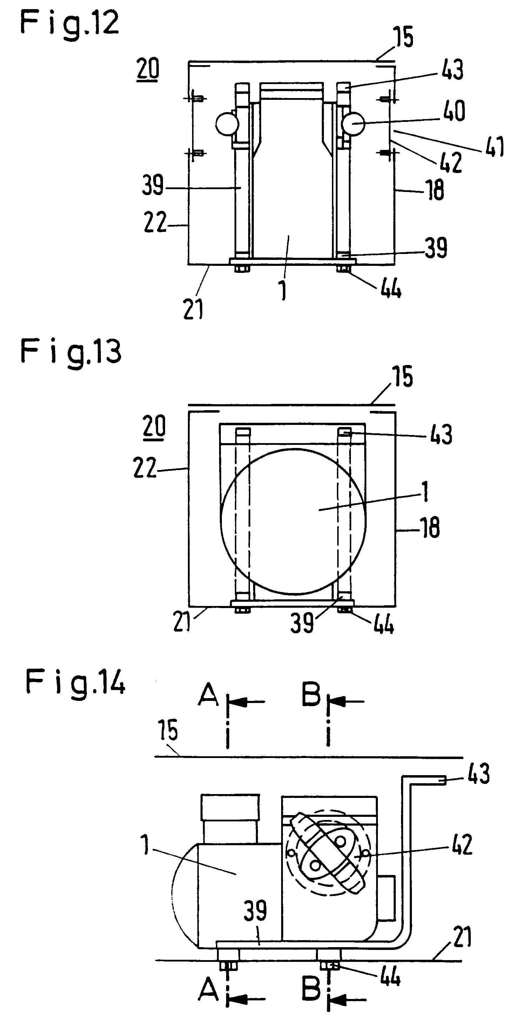

In Figur 11 ist die prinzipielle Einbindung von geteiltem Verdampfer und geteiltem Verflüssiger innerhalb der Kältemaschine dargestellt. Das Kühlmittel gelangt von der Druckseite des Verdichters 1 über einen Kältemittel-Verteilerkopf 37 zu zwei Verflüssigern 3, 4, von dort über eine Kältemittel-Zusammenführung 38 zum Expansionsventil 34, von dort über einen Kältemittel-Verteilerkopf 35 zu zwei Verdampfern 6, 7 und von dort über eine Kältemittel-Zusammenführung 36 zur Saugseite des Verdichters 1.

In den Figuren 12, 13, 14 sind Befestigungsmittel für den Verdichter und Zugangsmittel zu am Verdichter angeordneten Ventilen dargestellt. Bedingt durch die extrem kompakte Ausbildung des Klimagerätes ist die Befestigung des Verdichters am Gehäuse erschwert. Desweiteren ist der Zugang zu am Verdichter angeordnete Druck- und Saugleitungshandabsperrventilen erschwert.

Zur Erleichterung der Verdichtermontage innerhalb des Gehäuses wird deshalb der Einsatz speziell ausgebildeter Befestigungsleisten 39 vorgeschlagen. Diese Befestigungsleisten 39 sind derart doppelt abgewinkelt, daß sich ein längs des Bodenbereichs des Verdichters 1 erstreckender erster Schenkel, ein hierzu rechtwinklig abgebogener, sich vom Bodenbereich zum Deckelbereich erstreckender zweiter Schenkel und ein hierzu rechtwinklig abgebogener Handgriff 43 im Deckelbereich ergeben. Die Befestigungsleisten 39 können aus Vollmaterial (Stahl, Aluminium) mit im ersten Schenkel eingeschnittenen Gewinden für die Verdichter-Befestigungsschrauben 44 bestehen oder aus Blechstreifen mit Einniet- oder Schweißmuttern für die Befestigungsschrauben realisiert werden. Von Wichtigkeit ist, daß die Befestigungsleisten 39 derart gebogen sind, daß der Handgriff 43 im Freiraum vor oder hinter dem Verdichter erreichbar ist. Auf diese Weise ist es möglich, den Verdichter 1 mit Hilfe der Befestigungsleisten 39 innerhalb des Gehäuses zu bewegen, bis die Muttern/Gewindebohrungen des Verdichters exakt über den entsprechenden Bohrungen im Bodenblech 21 liegen und die Montage des Verdichters mittels Befestigungsschrauben 44 erfolgen kann.

In Figur 14 ist die doppelt abgebogene Struktur der Befestigungsleiste 39 mit erstem Schenkel im Bodenbereich, zweitem Schenkel senkrecht zum Bodenbereich und Handgriff 43 im Deckelbereich zu erkennen. Die Verdichter-Befestigungsschrauben 44 greifen durch die Bohrungen im Bodenblech 21 und die Gewinde bzw. die Einniet- oder Schweißmuttern in den Befestigungsleisten 39. In Figur 14 sind die Schnittebenen von zwei Schnitten A-A und B-B angegeben. Schnitt A-A ist in Figur 13 und Schnitt B-B ist in Figur 12 dargestellt. In beiden Schnitten sind die Lage der Befestigungsleisten 39 mit Handgriffen 43 und die Verdichter-Befestigungsschrauben 44 zu erkennen.

Zur Erleichterung des Zugangs zu am Verdichter angeordneten Druck- und Saugleitungshandabsperrventilen 40 sind Montageöffnungen 41 in den Seitenwänden 18, 22 des Gehäuses vorgesehen. Es wird hierzu auf die Figuren 12 und 14 hingewiesen. Die Montageöffnungen 41 erlauben ein einfaches Montieren der Befestigungsschrauben der Ventile 40 bei montiertem Verdichter 1, so daß ein Austausch des Verdichters bei gegenüber dem Verdichter abgesperrtem Kältekreislauf möglich ist. Um falsche Luftströmungen während des Betriebes zu vermeiden, werden die Montageöffnungen 41 mittels verschraubbarer Deckel 42 geschlossen.

Die in den Figuren 12 bis 14 angeführten Maßnahmen erleichtern vorteilhaft die Montage und den Austausch des Verdichters 1 und sind in entsprechender Weise auch für weitere Baukomponenten des Klimagerätes einsetzbar.

**Patentansprüche**

1. Kompaktklimagerät mit Verdampfer (6,7), Verdichter, Verflüssiger (3,4), Expansionsventil (3,4), Klimalüfter (10) und Verflüssigerlüfter (2), dadurch gekennzeichnet, daß Verdampfer (6,7) und/oder Verflüssiger (3,4) aus jeweils mindestens zwei getrennten Aggregaten zusammengesetzt sind, wobei die getrennten Aggregate derart versetzt hintereinander angeordnet sind, daß ein erster Teilluftstrom mit vorgegebener Luftgeschwindigkeit durch das erste Aggregat und ein zweiter Teilluftstrom mit hierzu erhöhter Luftgeschwindigkeit am ersten Aggregat vorbei und von dort mit vorgegebener Luftgeschwindigkeit durch das zweite Aggregat strömt und wobei die mindestens zwei getrennten Aggregate den gleichen Strömungswiderstand aufweisen.

2. Kompaktklimagerät nach Anspruch 1, dadurch gekennzeichnet, daß ein Luftleitblech (8,5) zwischen den versetzt hintereinander angeordneten Aggregaten angeordnet ist.

3. Kompaktklimagerät nach Anspruch 1 und/oder 2, dadurch gekennzeichnet, daß sich das Verhältnis der beiden Luftquerschnitte (B,C) für den ersten und den zweiten Teilluftstrom im Bereich zwischen 2:1 und 4:1 bewegt.

4. Kompaktklimagerät nach einem der Ansprüche 1 bis 3, dadurch gekennzeichnet, daß zwischen Expansionsventil (34) und den Verdampfern (6,7) und/oder zwischen Verdichter (1) und den Verflüssigern (3,4) ein Kältemittel-Verteilerkopf (35 und/oder 37) angeordnet ist.

5. Kompaktklimagerät nach einem der Ansprüche 1 bis 4, dadurch gekennzeichnet, daß die Montage von Baukomponenten, insbesondere die Montage des Verdichters (1) am Gehäuse über Befestigungsleisten (39) erfolgt, die ein Verschieben der Baukomponenten innerhalb des Gehäuses erleichtern.

6. Kompaktklimagerät nach einem der Ansprüche 1 bis 5, dadurch gekennzeichnet, daß verschließbare Montageöffnungen (41) am Gehäuse vorgesehen sind, die die Zugänglichkeit zu Baukomponenten, insbesondere zu am Verdichter (1) angeordneten Befestigungsschrauben der Ventile (40) erleichtern.

## Claims

1. A compact air conditioning unit with evaporator (6,7), compressor, liquefier (3,4), expansion valve (34), air conditioning fan (10) and liquefier fan (2), characterised in that evaporator (6,7) and/or liquefier (3,4) are composed in each case of at least two separate units, the separate units being so serially offset in respect of one another that a first partial air flow at a predetermined air speed passes through the first unit and a second partial air flow at a relatively increased air speed passes by the first unit, flowing then at a predetermined air speed through the second unit, the at least two separate units having the same flow resistance.

2. A compact air conditioning unit according to claim 1, characterised in that an air baffle (8,5) is disposed between the serially offset units.

3. A compact air conditioning unit according to claim 1 and/or 2, characterised in that the ratio of the two air cross-sections (B,C) for the first and second partial air flows pies in the range between 2:1 and 4:1.

4. A compact air conditioning unit according to one of claims 1 to 3, characterised in that there is a coolant distributor head (35 and/or 37) between expansion valve (34) and evaporators (6,7) and/or between compressor (1) and liquefiers (3,4).

5. A compact air conditioning unit according to one of claims 1 to 4, characterised in that the structural components, particularly the compressor (1) is mounted on the housing via fixing strips (39) which facilitate displacement of the structural components inside the housing.

6. A compact air conditioning unit according to one of claims 1 to 5, characterised in that there are on the housing assembly apertures (41) which are adapted to be closed and which facilitate access to structural components, particularly to fixing screws disposed on the compressor (1) for mounting the valves (40).

## Revendications

1. Appareil compact de climatisation avec des évaporateurs (6, 7), un compresseur, des condenseurs (3,4) une soupape de détente (34), un climatiseur (10), et un condenseurventilateur(2), caractérisé en ce que les évaporateurs (6, 7) et/ou condenseurs (3, 4) sont chacun composés d'au moins deux agrégats distincts, moyennant quoi les agrégats distincts sont disposés l'un derrière l'autre en étant décalés, de telle sorte qu'un premier flux partiel passe avec une vitesse prédéterminée dans le premier agrégat et un deuxième flux d'air partiel passe avec une vitesse augmentée à cet effet devant le premier agrégat, et de cet endroit, circule avec une vitesse prédéterminée à travers le deuxième agrégat et moyennant quoi les au moins deux agrégats distincts présentent la même résistance à l'écoulement.

2. Appareil compact de climatisation selon la revendication 1, caractérisé en ce qu'une tôle chicane (8, 5) est disposée entre les deux agrégats situés l'un derrière l'autre en étant décalés.

**3.** Appareil compact de climatisation selon la revendication 1 et/ou 2, caractérisé en ce que le rapport des deux sections d'air (B, C) pour le premier et le deuxième flux d'air partiel varie entre 2/1 et 4/1.

**4.** Appareil compact de climatisation selon la revendication 1 à 3, caractérisé en ce qu'entre la soupape de détente (34) et les évaporateurs (6, 7) et/ou entre le compresseur (1) et les condenseurs (3, 4) est disposé un distributeur de réfrigérant (35 et/ou 37).

**5.** Appareil compact de climatisation selon l'une quelconque des revendications 1 à 4, caractérisé en ce que le montage des composants, en particulier le montage du compresseur (1) sur le logement est réalisé à l'aide de baguettes de fixation (39), qui facilitent le déplacement des composants à l'intérieur du logement.

**6.** Appareil compact de climatisation selon l'une quelconque des revendication 1 à 5, caractérisé en ce que des ouvertures de montage (41) pouvant être fermées sont prévues sur le logement, qui facilitent l'accès aux composants, en particulier aux vis de fixation des soupapes (40) disposées sur le compresseur (1).

Fig.1

Fig.2

Fig.3

Fig.4

Fig.5

Fig.6

Fig.7

Fig.11

Fig.8

Fig.9

Fig.10

Fig.12

Fig.13

Fig.14